# EUROPÄISCHE PATENTSCHRIFT

(11) **EP 3 693 327 B1**
(45) Veröffentlichungstag und Bekanntmachung des Hinweises auf die Patenterteilung: **28.08.2024**
(21) Anmeldenummer: 20153491.4
(22) Anmeldetag: 24.01.2020
(51) Int. Cl.: B66F 9/075, B66F 9/24, B60L 53/16, B60L 53/14

(54) **FLURFÖRDERZEUG MIT EINER LADESCHNITTSTELLE**
INDUSTRIAL TRUCK WITH A CHARGING INTERFACE
CHARIOT DE MANUTENTION DOTÉ D'UNE INTERFACE DE CHARGEMENT

(30) Priorität: 25.01.2019 DE 102019101922
(43) Veröffentlichungstag der Anmeldung: 12.08.2020
(73) Patentinhaber: Jungheinrich Aktiengesellschaft, 22047 Hamburg (DE)
(72) Erfinder: LOHMANN, Helmut, 27404 Gyhum (DE); KNIE, Andreas, 20255 Hamburg (DE)
(74) Vertreter: Hauck Patentanwaltspartnerschaft mbB

(56) Entgegenhaltungen:
- EP-A1- 3 418 248
- DE-A1- 102011 000 094
- DE-T5- 112013 000 094
- JP-A- 2012 201 461

## Beschreibung

Die vorliegende Erfindung betrifft ein Flurförderzeug mit einer Ladeschnittstelle. Das erfindungsgemäße Flurförderzeug besitzt ein Lastteil und ein Antriebsteil, das eine Fahrerstandplattform aufweist. Die Fahrerstandplattform ist eine fest eingebaute Fahrerstandplattform, die einen Einstieg und mindestens eine Seitenwand aufweist. Aus DE 11 2013 000 094 T5 ist ein Gegengewichtstapler mit Hubmast bekannt geworden, der eine Ladeschnittstelle innerhalb der Fahrzeugkabine besitzt. Nachteilig an dieser Anordnung der Ladeschnittstelle ist, dass keine Möglichkeit besteht das Ladekabel während des Ladevorgangs des Gegengewichtstaplers in definierter Weise aus dem Fahrzeug heraus zu führen, so dass die Gefahr einer Beschädigung des Ladekabels besteht.

Aus JP 2012-201461 A ist ein Flurförderzeug mit einer Fahrerstandplattform vorgesehen. An der Seitenwand der Fahrerstandplattform ist eine Ladeeinheit für einen Ladestecker vorgesehen. Die Steckverbindung erfolgt hierbei horizontal.

Der Erfindung liegt die Aufgabe zugrunde ein Flurförderzeug mit einer Fahrerstandplattform bereitzustellen, dessen Ladeschnittstelle sicher und gut zugänglich angeordnet ist.

Erfindungsgemäß wird die Aufgabe durch ein Flurförderzeug mit den Merkmalen aus Anspruch 1 gelöst. Vorteilhafte Ausgestaltungen bilden die Gegenstände der Unteransprüche.

Das erfindungsgemäße Flurförderzeug besitzt ein Lastteil und ein Antriebsteil. Das Antriebsteil ist mit einer Fahrerstandplattform versehen, die von mindestens einer Seitenwand begrenzt ist. Ferner ist mindestens ein batteriegespeister elektrischer Antrieb vorgesehen. Für ein Wiederaufladen der Batterie in ihrem eingebauten Zustand ist eine Ladeschnittstelle vorgesehen. Ladeschnittstellen sind an sich bekannt, sie enthalten elektrische Kontakte, die von einem mit der Ladeschnittstelle zusammenwirkenden elektrischen Steckverbinder für einen Ladevorgang kontaktiert werden. Erfindungsgemäß ist vorgesehen, dass die Ladeschnittstelle an der dem Einstieg gegenüberliegenden Stirnwand vorgesehen ist. Hierdurch entstehen zwei besondere Vorteile: Erstens befindet sich die Ladeschnittstelle im Bereich der Fahrerstandplattform und damit im Inneren der Fahrzeugkontur. Hierdurch können die Flurförderzeuge bei einem Ladevorgang dicht nebeneinander stehen, ohne dass ein Risiko besteht, an den Ladestecker in der Ladeschnittstelle zu stoßen. Der zweite Vorteil der Anordnung der Ladeschnittstelle im Inneren der Fahrzeugkontur liegt in einer besonders ergonomischen Weise, wie der Ladestecker in die Ladeschnittstelle eingesetzt werden kann. Indem die Ladeschnittstelle gegenüber von dem Einstieg liegt, ist es möglich durch den Einstieg hindurch den Ladestecker in die Ladeschnittstelle zu stecken und auch wieder herauszuziehen.

Bevorzugt ist eine Bedieneinheit für das Flurförderzeug an der Stirnwand angebracht. In dieser Anordnung tritt die Bedienperson durch den Eintritt auf die Fahrerstandplattform und steht vor der Bedieneinheit mit der Ladeschnittstelle direkt in Reichweite.

In einer bevorzugten Ausgestaltung ist die Ladeschnittstelle außermittig bezogen auf die Fahrzeugmittelebene an der Stirnwand angeordnet. Die außermittige Anordnung erlaubt eine im besonderen Maße ergonomische Benutzung der Ladeschnittstelle beim Ein- und Ausstecken des Ladesteckers. Bevorzugt sind zueinander gegenüberliegende Seitenwände vorgesehen.

In einer bevorzugten Weiterbildung ist mindestens ein Handgriff an einer der Seitenwände und/oder der Stirnwand derart angeordnet, dass er von einer vor der Fahrerstandplattform stehenden Bedienperson ergriffen werden kann, um einen Ladestecker einhändig in die Ladeschnittstelle einzuführen. Das Zusammenspiel zwischen Handgriff und einhändigem Einsetzen des Ladesteckers, erlaubt eine über die Schultern koordinierte Zug-Druckbewegung mit der eine notwendige Einsteckkraft für den Ladestecker aufgebracht wird.

In einer weiteren bevorzugten Ausgestaltung besitzt die Ladeschnittstelle eine Steckrichtung, die aus der Horizontalen geneigt ist. Bevorzugt wird bei der Steckrichtung der Ladestecker schräg von oben nach unten in die Ladeschnittstelle eingeführt. Dies bedeutet, dass beim Einsetzen des Ladesteckers in die Ladeschnittstelle, ein Steckvorgang über das Körpergewicht der Bedienperson unterstützt werden kann. Diese Unterstützung erlaubt es in ergonomischer Weise die erforderliche Einsteckkraft für den Steckvorgang aufzubringen. Auch bei einem Herausziehen des Ladesteckers aus der Ladeschnittstelle, kann hier mit Unterstützung des Oberkörpers die erforderliche Kraft aufgebracht werden.

In einer bevorzugten Ausgestaltung ist die Ladeschnittstelle mit einer Klappe ausgestattet. Die Klappe ist bei einem elektrischen Anschluss eines Ladesteckers geöffnet und ohne den Ladestecker verschließt die Klappe die Öffnung zu den elektrischen Kontakten der Ladeschnittstelle.

In einer zweckmäßigen Weiterentwicklung ist ein Sensor vorgesehen, der eine Offen-Position der Klappe erfasst und diese an eine Fahrzeugsteuerung meldet. Die Fahrzeugsteuerung sperrt bei erfasster Offen-Position der Klappe eine oder mehrere vorbestimmte Fahrzeugfunktionen. Beispielsweise kann ein Starten und Wegfahren mit dem Flurförderzeug für eine geöffnete Klappe der Ladeschnittstelle gesperrt sein.

In einer bevorzugten Weiterbildung ist die Ladeschnittstelle direkt oder mit einem Halter an der Batterie montiert und durch eine Durchbrechung in der Stirnwand zugänglich. Der Vorteil, die Ladeschnittstelle an der Batterie zu montieren besteht darin, dass an der Batterie eine ausreichend feste Montage erfolgen kann, um die Kräfte beim Ein- und Aussteckern aufzufangen. Weitere Vorteile der Montage der Ladeschnittstelle an der Batterie sind, dass für Wartung und Reparatur des Fahrzeugs die Batterie gemeinsam mit der Ladeschnittstelle ohne Lösen einer elektrischen Verbindung verschoben werden kann. Zudem können durch eine Befestigung an der Batterie andere raumfordernde Bauteile entfallen.

Ein bevorzugtes Ausführungsbeispiel wird anhand der beiliegenden Figuren gezeigt. Es zeigen:
- Figur 1a, b: ein Flurförderzeug mit der erfindungsgemäßen Ladeschnittstelle mit und ohne eingesetztem Ladestecker in einer Ansicht von schräg,
- Figur 2: das Flurförderzeug aus Figur 1 in einer Ansicht von oben und
- Figur 3: das Flurförderzeug aus Fig. 2 in einer Ansicht von der Seite bei transparenter Seitenwand.

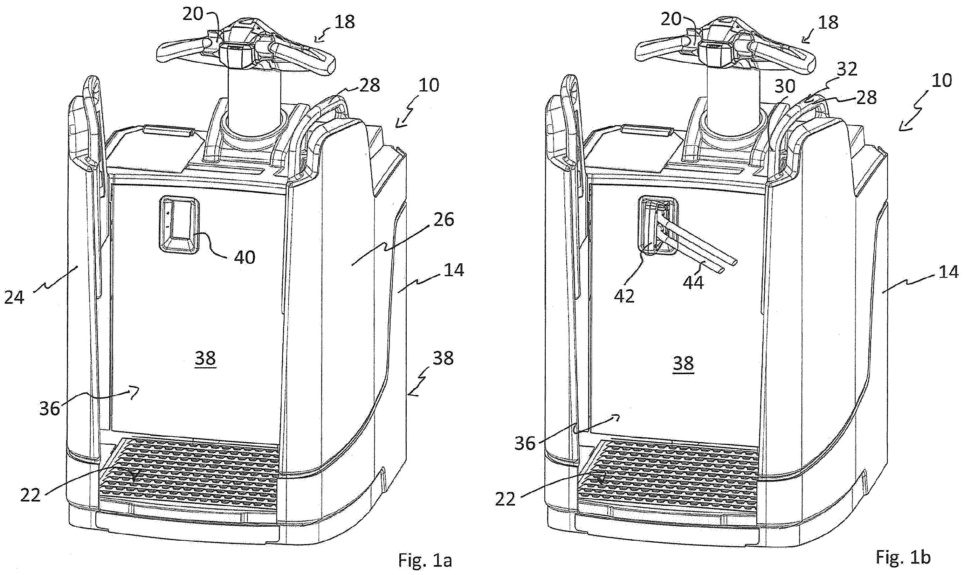

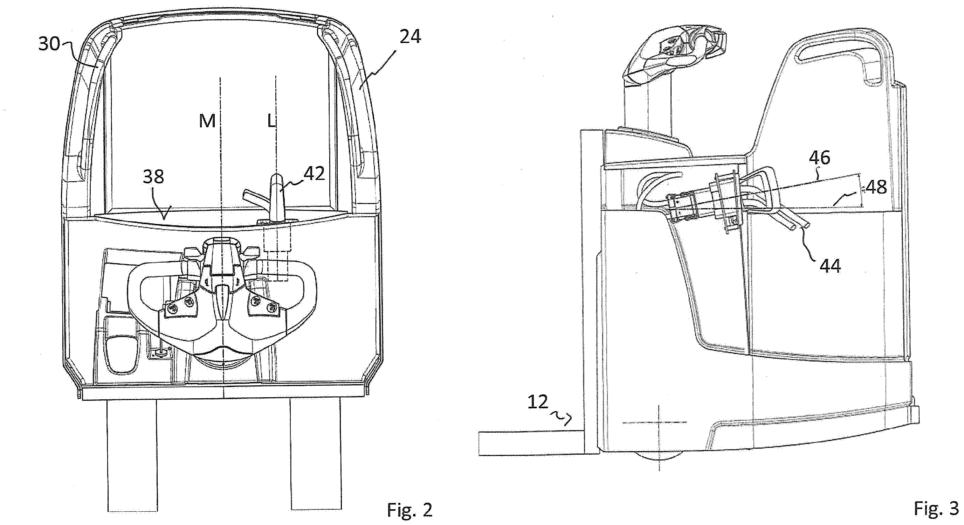

Figur 1 zeigt ein Flurförderzeug 10 mit einem Lastteil 12 (vgl. Fig. 3) und einem Antriebsteil 14. Das Lastteil 12 besitzt zwei anhebbare Lastarme 16, die zur besseren Übersicht nur teilweise dargestellt sind. Über eine nicht dargestellte Hubeinrichtung können die Lastarme 16 zum Transport einer Last angehoben werden.

Das Antriebsteil 14 besitzt eine Bedieneinheit 18, die als ein Multifunktions-Lenkrad mit zahlreichen Bedienelementen 20 zur Bedienung des Flurförderzeugs ausgebildet ist. In dem vom Lastteil 12 fortweisenden Teil des Antriebsteils 14 ist eine Fahrerstandplattform 22 vorgesehen, die seitlich durch Seitenwände 24, 26 begrenzt ist. Die Seitenwand 26 besitzt einen Handgriff 28, der einen senkrecht verlaufenden Griffabschnitt 30 und einen horizontal verlaufenden Griffabschnitt 32 besitzt. Die von den Seitenwänden 24 und 26 seitlich umgebene Fahrerstandplattform 22 besitzt auf ihrer vom Lastteil fortweisenden Seite einen Einstieg 36. Dem Einstieg 36 gegenüber befindet sich die Stirnwand 38, in der die Ladeschnittstelle 40 angeordnet ist. Wie in Figur 1a zu erkennen, ist die Ladeschnittstelle 40 im Inneren des Antriebsteils angeordnet und schließt mit der Stirnwand 38 bündig ab. Neben der dargestellten Anordnung mit zwei einander gegenüberliegenden Seitenwänden 24, 26 und einem von diesen begrenzten Einstieg 36 sind auch andere Konfigurationen und Begrenzungen für den Fahrerstandplatz möglich.

In Fig. 1b ist in die Ladeschnittstelle 40 ein Ladestecker 42 mit seinen Kabeln 44 eingesetzt. Der Ladestecker 42 kann von einem Ladegerät stammen oder im Fall, dass ein an Bord integriertes Ladegerät vorgesehen ist, direkt mit einer Spannungsquelle verbunden sein.

In Figur 3 dargestellt ist, dass der Ladestecker 42 entlang der Einsteckrichtung 46 schräg von oben nach unten in die Stirnwand 38 hineingedrückt wird. Die Einsteckrichtung 46 ist gegenüber der Horizontalen 48 geneigt. Wird der Einsteckvorgang mit der linken Hand ausgeführt, besteht für den Bediener die Möglichkeit sich mit der rechten Hand an dem Handgriff 30 festzuhalten. Für Rechtshänder ist an der Seitenwand 24 ebenfalls ein Griff zum Festhalten vorgesehen.

Fig. 2 zeigt die Fahrzeugmittenlängsachse M, die gegenüber der Einsteckrichtung L seitlich versetzt ist.

### Bezugszeichenliste

- 10: Flurförderzeug
- 12: Lastteil
- 14: Antriebsteil
- 16: Lastarm
- 18: Bedienelement
- 20: Bedienelement
- 22: Fahrerstandplattform
- 24: Seitenwand
- 26: Seitenwand
- 28: Handgriff
- 30: Griffabschnitt
- 32: Griffabschnitt
- 36: Einstieg
- 38: Stirnwand
- 40: Ladeschnittstelle
- 42: Ladestecker
- 44: Kabel
- 46: Einsteckrichtung
- 48: Horizontale

## Patentansprüche

1. Flurförderzeug (10) mit einem Lastteil (12) und einem Antriebsteil (14), das eine Fahrerstandplattform (22) aufweist, die einen Einstieg (36) und mindestens eine Seitenwand (24, 26) aufweist, wobei die Fahrerstandplattform (22) auch eine dem Einstieg (36) gegenüberliegende Stirnwand (38) aufweist und mindestens ein batteriegespeister elektrischer Antrieb vorgesehen ist, wobei die Batterie über eine Ladeschnittstelle (40) in ihrem eingebauten Zustand aufgeladen werden kann, **dadurch gekennzeichnet, dass** die Ladeschnittstelle (40) an der dem Einstieg (36) gegenüberliegenden Stirnwand (38) angeordnet ist.

2. Flurförderzeug nach Anspruch 1, **dadurch gekennzeichnet, dass** eine Bedieneinheit (18) oberhalb der Stirnwand (38) angebracht ist.

3. Flurförderzeug (10) nach Anspruch 1 oder 2, **dadurch gekennzeichnet, dass** die Ladeschnittstelle (40) außermittig bezogen auf eine Fahrzeugmittelebene (M) an der Stirnwand (38) angeordnet ist.

4. Flurförderzeug nach einem der Ansprüche 1 bis 3, **dadurch gekennzeichnet, dass** der Einstieg (36) seitlich von zwei Seitenwänden (24, 26) begrenzt ist.

5. Flurförderzeug (10) nach einem der Ansprüche 1 bis 4, **dadurch gekennzeichnet, dass** mindestens ein Handgriff (28) an einer der Seitenwände (24, 26) und/oder der Stirnwand (38) derart angeordnet ist, dass er von einer vor der Fahrerstandplattform (22) stehenden Bedienperson ergriffen werden kann, um einen Ladestecker (42) einhändig in die Ladeschnittstelle (40) einzuführen.

6. Flurförderzeug (10) nach einem der Ansprüche 1 bis 5, **dadurch gekennzeichnet, dass** die Ladeschnittstelle (40) eine Steckrichtung (46) besitzt, die aus der Horizontalen (48) geneigt ist, wobei ein Einsteckvorgang schräg von oben nach unten erfolgt.

7. Flurförderzeug (10) nach einem der Ansprüche 1 bis 6, **dadurch gekennzeichnet, dass** die Ladeschnittstelle (40) eine Klappe aufweist, die bei einem elektrischen Anschluss eines Ladesteckers (42) geöffnet ist und ohne Ladestecker (42) den Eingang zu elektrischen Kontakten in der Ladeschnittstelle (40) verschließt.

8. Flurförderzeug (10) nach Anspruch 7, **dadurch gekennzeichnet, dass** ein Sensor vorgesehen ist, der eine Offen-Position der Klappe und/oder einen gesteckten Ladestecker (24) erfasst und diese an eine Fahrzeugsteuerung meldet, die bei einer Meldung des Sensors eine oder mehrere vorbestimmte Fahrzeugfunktionen sperrt.

9. Flurförderzeug (10) nach einem der Ansprüche 1 bis 8, **dadurch gekennzeichnet, dass** die Ladeschnittstelle (40) an der Batterie montiert ist und die Stirnwand (38) eine Durchbrechung zur Ladeschnittstelle (40) hin aufweist.

## Claims

1. An industrial truck (10) with a load part (12) and a drive part (14) which comprises a stand-on platform (22) comprising an entry point (36) and at least one side wall (24, 26), wherein the stand-on platform (22) also comprises a front wall (38) opposite the entry point (36) and at least one battery-powered electric drive, wherein the battery can be charged via a charging interface (40) in its installed state, **characterized in that** the charging interface (40) is arranged on the front wall (38) opposite the entry point (36).

2. The industrial truck according to claim 1, **characterized in that** an operating unit (18) is fitted above the front wall (38).

3. The industrial truck (10) according to claim 1 or 2, **characterized in that** the charging interface (40) is arranged on the front wall (38) so as to be off-center with respect to a vehicle center plane (M).

4. The industrial truck according to any one of claims 1 to 3, **characterized in that** the entry point (36) is laterally delimited by two side walls (24, 26).

5. The industrial truck (10) according to any one of claims 1 to 4, **characterized in that** at least one handle (28) is arranged on one of the side walls (24, 26) and/or the front wall (38) in such a way that it can be gripped by an operator standing in front of the stand-on platform (22) in order to introduce a charging plug (42) into the charging interface (40) with one hand.

6. The industrial truck (10) according to any one of claims 1 to 5, **characterized in that** the charging interface (40) has an insertion direction (46) that is inclined from the horizontal (48), wherein a plug-in process takes place obliquely from above downwards.

7. The industrial truck (10) according to any one of claims 1 to 6, **characterized in that** the charging interface (40) comprises a flap which is open in the presence of an electrical connection of a charging plug (42) and, without a charging plug (42), closes the access point to electrical contacts in the charging interface (40).

8. The industrial truck (10) according to claim 7, **characterized in that** a sensor is provided which detects an open position of the flap and/or an inserted charging plug (24) and reports same to a vehicle controller which blocks one or more predetermined vehicle functions in the event of a report by the sensor.

9. The industrial truck (10) according to any one of claims 1 to 8, **characterized in that** the charging interface (40) is mounted on the battery and the front wall (38) comprises a through-hole to the charging interface (40).

## Revendications

1. Chariot de manutention (10) comprenant une partie de charge (12) et une partie d'entraînement (14), laquelle présente une plateforme de conducteur (22), laquelle présente un accès (36) et au moins une paroi latérale (24, 26), dans lequel la plateforme de conducteur (22) présente également une paroi avant (38) opposée à l'accès (36) et il est prévu au moins un entraînement électrique alimenté par batterie, dans lequel la batterie peut être chargée par le biais d'une interface de chargement (40) dans son état monté, **caractérisé en ce que** l'interface de chargement (40) est disposée sur la paroi avant (38) opposée à l'accès (36).

2. Chariot de manutention selon la revendication 1, **caractérisé en ce qu'**une unité de commande (18) est fixée au-dessus de la paroi avant (38).

3. Chariot de manutention (10) selon la revendication 1 ou 2, **caractérisé en ce que** l'interface de chargement (40) est disposée de façon excentrée par rapport à un plan médian du véhicule (M) sur la paroi avant (38).

4. Chariot de manutention selon l'une des revendications 1 à 3, **caractérisé en ce que** l'accès (36) est délimité latéralement par deux parois latérales (24, 26).

5. Chariot de manutention (10) selon l'une des revendications 1 à 4, **caractérisé en ce qu'**au moins une poignée (28) est disposée de telle façon sur l'une parmi les parois latérales (24, 26) et/ou la paroi avant (38), qu'elle peut être saisie par un opérateur se tenant debout devant la plateforme de conducteur (22), afin d'insérer un connecteur de chargement (42) d'une main dans l'interface de chargement (40).

6. Chariot de manutention (10) selon l'une des revendications 1 à 5, **caractérisé en ce que** l'interface de chargement (40) possède une direction d'enfichage (46), laquelle est inclinée par rapport à l'horizontale (48), dans lequel un processus d'enfichage est effectué en oblique du haut vers le bas.

7. Chariot de manutention (10) selon l'une des revendications 1 à 6, **caractérisé en ce que** l'interface de chargement (40) présente un clapet, lequel est ouvert lors d'une connexion électrique d'un connecteur de chargement (42) et ferme l'entrée vers les contacts électriques dans l'interface de chargement (40) en l'absence de connecteur de chargement (42).

8. Chariot de manutention (10) selon la revendication 7, **caractérisé en ce qu'**il est prévu un capteur, lequel détecte une position ouverte du clapet et/ou un connecteur de chargement (24) enfiché et notifie ceux-ci à une commande de véhicule, laquelle verrouillé une ou plusieurs fonctions de véhicule prédéfinies lors d'une notification du capteur.

9. Chariot de manutention (10) selon l'une des revendications 1 à 8, **caractérisé en ce que** l'interface de chargement (40) est montée sur la batterie et la paroi avant (38) présente un évidement vers l'interface de chargement (40).
